# EUROPÄISCHE PATENTSCHRIFT

(11) **EP 3 600 940 B1**
(45) Veröffentlichungstag und Bekanntmachung des Hinweises auf die Patenterteilung: **10.11.2021**
(21) Anmeldenummer: 18717850.4
(22) Anmeldetag: 26.03.2018
(51) Int. Cl.: B60L 50/50, B60L 50/53, B60L 58/12, B60L 58/25, B60L 1/00, B60L 7/18, B60L 7/26, B60L 7/08

(54) **ELEKTRISCH ANGETRIEBENES UNTERTAGEFAHRZEUG, INSBESONDERE FAHRLADER**
ELECTRICALLY DRIVEN UNDERGROUND VEHICLE, IN PARTICULAR A MOBILE LOADER
VÉHICULE SOUTERRAIN À ENTRAÎNEMENT ÉLECTRIQUE, EN PARTICULIER ENGIN DE PELLETAGE

(30) Priorität: 28.03.2017 DE 102017106619
(43) Veröffentlichungstag der Anmeldung: 05.02.2020
(73) Patentinhaber: GHH Fahrzeuge GmbH, 45891 Gelsenkirchen (DE)
(72) Erfinder: BRANDENSTEIN, Dirk, 47877 Willich (DE); DEIMEL, Thomas, 45472 Mülheim/Ruhr (DE)
(74) Vertreter: Patentanwälte Bauer Vorberg Kayser
(86) Internationale Anmeldenummer: PCT/EP2018/057636
(87) Internationale Veröffentlichungsnummer: WO 2018/178009

(56) Entgegenhaltungen:
- EP-A1- 2 519 420
- EP-A1- 2 578 436
- DE-T5-112012 005 255
- US-A1- 2005 235 865
- US-A1- 2011 175 579
- US-A1- 2012 298 004

## Beschreibung

Die Erfindung betrifft ein elektrisch angetriebenes verfahrbares Untertagefahrzeug, nämlich ein Fahrlader.

Die Erfindung wird im Folgenden beispielhaft für Elektrofahrlader erläutert.

Elektrofahrlader bestehen aus einem Chassis, in das die Antriebselemente integriert sind. Üblicherweise sind Fahrlader gummibereift, und meist mit einem AIIradantrieb ausgerüstet. Ein Schaufelausleger mit Laderschaufel ist am vorderen Rahmen montiert.

Aufgrund der oftmals engen Streckenführungen sind Elektrofahrlader in aller Regel mit einer Knicklenkung ausgerüstet, was einen geringen Kurvenradius zur Folge hat. Seitlich hinter der Knicklenkung ist die Fahrerkabine sehr tiefliegend hinter der Knicklenkung angeordnet. Der Fahrersitz ist entweder quer zur Fahrrichtung oder schwenkbar angeordnet. Dadurch bedingt kann der Bediener sowohl bei Vorwärts- wie bei Rückwärtsbewegung den Fahrweg einsehen.

Alternativ werden in einigen Bergwerken auch halb- und vollautomatische Elektrofahrlader eingesetzt, bei denen die Aufnahme des Haufwerks ferngesteuert durch einen Bediener, der in einer Leitwarte sitzen kann, erfolgt.

Elektrofahrlader werden über ein bis zu etwa 300 Meter langes Schleppkabel mit elektrischer Energie versorgt und haben eine Leistung von bis zu etwa 320 Kilowatt. Das Schleppkabel wird im Fahrzeugheck auf eine Kabeltrommel aufgewickelt, wobei der Antrieb der Kabeltrommel bei modernen Ladern mikroprozessorgesteuert ist. Dies hat den Vorteil, dass das Kabel stets optimal aufgewickelt ist. Elektrofahrlader sind zum Beispiel mit einem aktiven Trommelantrieb ausgestattet, der eine geordnete Wicklung garantiert, wodurch lange Standzeiten des Kabels aufgrund geringerer Zugkräfte erreicht werden. Auch kann der Durchhang des Schleppkabels mit Sensoren überwacht werden. Besteht bei der Fahrt aufgrund zu starkem Durchhangs die Gefahr des Überfahrens des Schleppkabels, wird der Lader unverzüglich stillgesetzt.

Elektrofahrlader bieten im untertägigen Einsatz insbesondere Vorteile durch ihren emissionsfreien Antrieb und sind somit in besonderem Maße für Projekte mit geringer Frischluftzufuhr geeignet. Allerdings haben Elektrofahrlader, bedingt durch das Schleppkabel, nur einen begrenzten Aktionsradius und sind dadurch unflexibel. Die mangelnde Flexibilität ist insbesondere damit verbunden, dass Elektrofahrlader ohne das Einspeisekabel nicht verfahren werden können. Um den Elektrofahrlader an einen anderen Einsatzort verfahren zu können, muss zunächst das Schleppkabel abgeklemmt werden und der Elektrofahrlader über einen Generator mit Netzspannung versorgt werden.

Auch ist oftmals die Leistung der Elektrofahrlader unzureichend, da dem Antriebssystem über das Schleppkabel nicht ausreichend Leistung zugeführte werden kann. Die Kabelquerschnitte können nicht beliebig vergrößert werden, weil sonst durch das dickere Kabel auf einem Kabeltrommelsystem die Reichweite reduziert würde. US 2012/298004 A1 offenbart ein elektrisch angetriebenes Untertagefahrzeug.

US 2011/175579 A1 offenbart ein Bagger für den Bergbau mit elektronischen Energiespeicher und Energierückgewinnungssystemen.

Ausgehend von diesem Stand der Technik besteht daher die Aufgabe der Erfindung darin, ein elektrisch angetriebenes verfahrbares Untertagefahrzeug, nämlich ein Fahrlader mit verbesserter Leistung und Flexibilität bereitzustellen. Weiterhin ist Aufgabe der Erfindung die Bereitstellung eines Verfahrens zum Betrieb eines solchen Untertagefahrzeugs, welches die Leistung und Flexibilität verbessert.

Erfindungsgemäß wird die Aufgabe durch ein elektrisch angetriebenes verfahrbares Untertagefahrzeug mit den Merkmalen des Patentanspruchs 1 sowie ein Verfahren zum Betrieb eines solchen Untertagefahrzeug mit den Verfahrensschritten des Patentanspruchs 4 gelöst.

Erfindungsgemäß weisen die Untertagefahrzeuge, im Folgenden Elektrofahrlader, einen zusätzlichen Energiespeicher auf. Dieser ist in Größe und Leistung derart dimensioniert, dass der Elektrofahrlader ohne Energieeinspeisung aus dem Versorgungsnetz verfahren werden kann. Dadurch wird ein Wechsel zu einem neuen Einsatzort des Elektrofahrladers deutlich erleichtert.

Ein weiterer Vorteil besteht darin, dass bei hohen Leistungsanforderungen die Spitzenenergie aus dem Energiespeicher entnommen werden kann.

Ein weiterer Vorteil besteht darin, dass bei hohen Leistungsanforderungen die Spitzenenergie aus dem Energiespeicher entnommen werden kann.

Die Energieeinspeisung über das Versorgungsnetz und die Entnahme der Spitzenlast aus dem Energiespeicher wir erfindungsgemäß nicht nach einem festen Verhältnis gesteuert, sondern anhand von Umgebungsvariablen über einen Prozessor der Schaltanlage geregelt. Das Verhältnis der elektrischen Energieströme aus dem Versorgungsnetz und dem Energiespeicher wird also bedarfsabhängig geregelt.

So hängt zum Beispiel die maximal über das Schleppabel zu transportierende Leistung von der Länge des auf einer Trommel des Elektrofahrladers aufgerollten Kabels ab. Befeindet sich viel Kabel auf der Trommel, kann nur eine kleinere Leistung übertragen werden. Weiterhin spielt auch die die Kabeltemperatur hinsichtlich der maximal zu übertragenden Leistung eine Rolle. Erfindungsgemäß können die genannten Effekte durch eine aktive Regelung und entsprechendem Zuschalten von Energie aus dem Energiespeicher ausgeglichen werden. Eine entsprechende Software steuert aktiv das Verhältnis zwischen der Leistung aus dem Versorgungsnetz und der Energiespeicherleistung.

Erfindungsgemäß ist vorgesehen, dass der Bremsvorgang des Elektrofahrladers durch die Software überwacht und geregelt wird.

Bei einem Bremsvorgang muss kinetische Energie aus dem Antriebssystem herausgeführt werden, damit der Elektrofahrlader zum Stillstand kommen kann. Die kinetische Energie wird dabei als erstes über den als Generator arbeitenden Antriebsmotor in das elektrische System des Elektrofahrladers zurückgespeist.

Wenn zu diesem Zeitpunkt Energieanforderungen von einem anderen Verbraucher vorhanden sein sollten, wird die Bremsenergie zur Versorgung dieser Verbraucher genutzt. Sollte keine Energieanforderung gegeben sein, wird der Ladezustand des Energiespeichers geprüft und ggf. der Energiespeicher aufgeladen. Sollte mehr Bremsenergie vorhanden sein, als der Energiespeicher aufnehmen kann, wird die Energie aktiv in das Versorgungsnetz zurück gespeist. Nur wenn das das Versorgungsnetz zu diesem Zeitpunkt keine Bremsenergie aufnehmen kann, muss die Bremsenergie über Bremswiderstände in Wärmeenergie umgesetzt werden.

Die im Bremsbetrieb erzeugte Energie wird mit einem Wechselrichter und einer Aktiv-Front-end-Einheit phasensynchron ins Netz zurückgegeben. Steigt die Zwischenkreisspannung auf einen bestimmten Wert, so wird die Gleichspannung im Zwischenkreis durch einen Wechselrichter amplituden-und phasensynchron in das Netz zurückgegeben. Die Rückspeisung bei generatorischem Betrieb des Motors erfolgt über einen zum Gleichrichter antiparallel geschalteten Wechselrichter. Dieser arbeitet phasensynchron zum Netz. Hierbei wird zum Zeitpunkt t=0 im Drehstromnetz die Phase detektiert, die den höchsten Spannungswert hat. Phasensynchron wird nun Energie in das Netz zurückgegeben. Es wird jeweils auf die nächste Phase kommutiert, wenn diese die erste in der Höhe der Spannung übersteigt.

Die Steuerung bzw. Software überwacht also den gesamten Bremsvorgang. Sollte kein System aktiv Bremsenergie aufnehmen können, aktiviert die Steuerung die mechanische Bremsanlage des Elektrofahrladers.

Ein weiterer Faktor, welcher erfindungsgemäß bei der Energieverteilung aktiv berücksichtigt wird, ist das Kühlsystem des Elektrofahrladers. Sowohl das Energiespeichersystem, als auch das Bremssystem unterliegen Grenzwerten der Temperatur. Die Temperatur beeinflusst die Leistungsfähigkeit der beiden Systeme. So bedeutet eine zu hohe Temperatur des Energiespeichers, dass das System weniger Energie ab- und aufnehmen kann. Im Falle der Leistungsabgabe können erfindungsgemäß somit unter Berücksichtigung der gesamten Energiebilanz ggf. die Leistungsparameter des Elektrofahrladers reduziert werden, im Falle der Energieaufnahme nehmen andere Verbraucher des Elektrofahrladers Energie auf bzw. wandeln sie diese in Wärme um.

Erfindungsgemäß wird die elektrische Energie direkt für eine Fahrbewegung des Fahrladers eingesetzt. Dabei wird die Fahrbewegung entweder durch einen oder auch durch mehrere elektrische Antriebe realisiert. Die erfindungsgemäße Schaltanlage mit dem zugehörigen Prozessor und der erfindungsgemäßen Software ermöglichen dabei, dass die Energie des Energiespeichers einerseits zum Verfahren des Fahrladers eingesetzt werden kann, andererseits die beiden Energiequellen (Versorgungsnetz, Energiespeicher) auch gleichzeitig genutzt werden können, um Leistungsspitzen während des Betriebs abzufangen.

Durch die optimierte Steig-/Bremsleistung wird auch der Wirkungsgrad der gesamten Maschine verbessert. Auch sind keine hohen Hydraulikdrücke mehr notwendig, da nur die Lenk-/Arbeitshydraulik angetrieben werden muss. Insgesamt ist das Temperaturniveau des Fahrladers geringer als bei Fahrladern nach dem Stand der Technik.

In einer besonders vorteilhaften Ausführungsvariante ist ein Kühlsystem vorgesehen, welches den Energiespeicher kühlt. Dies ist insbesondere dann sinnvoll, wenn die Umgebungstemperatur 40° übersteigt.

In einer ersten Ausführungsvariante beträgt die maximale Leistung des oder der Hilfsantriebe etwa 100 bis 150 kW, vorzugsweise 130 kW. Die maximale Leistung der Hilfsantriebe während der Fahrt liegt bei 50 bis 60 kW. Die Fahrgeschwindigkeit im vom Versorgungsnetz abgekoppelten Zustand kann erfindungsgemäß etwa 5 km/h betragen, wobei die maximal zurückzulegende Fahrstrecke etwa 500 m beträgt.

Weitere vorteilhafte und bevorzugte Ausgestaltungen, Merkmale und Eigenschaften ergeben sich aus der nachfolgenden speziellen Beschreibung mit Bezug auf die Figuren. Die lediglich ein Ausführungsbeispiel wiedergebende Zeichnung zeigt
- Fig. 1: eine perspektivische Darstellung eines Ausführungsbeispiels eines Fahrwerks eines erfindungsgemäßen Fahrladers.
- Fig. 2: eine vereinfache Prinzipdarstellung des Systemaufbaus des erfindungsgemäßen Fahrladers.

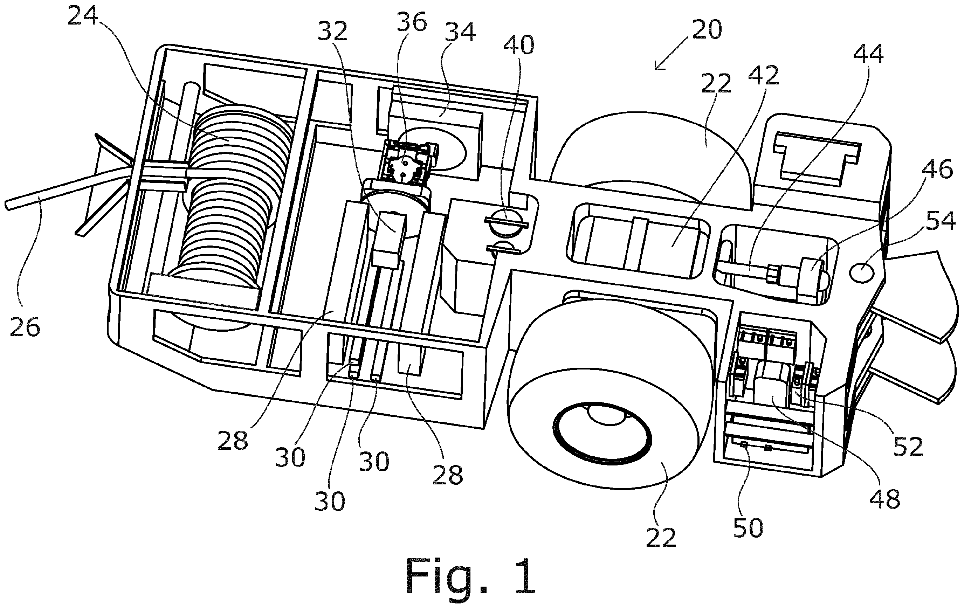

Figur 1 zeigt ein Fahrwerk eines erfindungsgemäßen Untertagefahrzeugs von oben. Gezeigt ist ein Fahrlader 20. Erkennbar sind zwei angetriebene Antriebsräder 22. Im hinteren Bereich des Fahrladers 20 ist eine Kabeltrommel 24 mit einem abrollbarem Schleppkabel 26 gezeigt. Über das Schleppkabel 26 ist der Fahrlader 20 mit einem elektrischen Versorgungsnetz verbindbar. Die Kabeltrommel 24 ist vorzugsweise mikroprozessorgesteuert, wodurch die Aufwicklung und der Durchhang des Schleppkabels 26 optimiert ist.

Zwischen der Kabeltrommel 24 und den Antriebsrädern 22 sind im gezeigten Ausführungsbeispiel zwei quer zur Fahrtrichtung angeordnete Energiespeicher 28 angeordnet. Zwischen diesen befinden sich drei ebenfalls quer zur Fahrtrichtung angeordnete Bremswiderstände 30 sowie ein Hilfsantriebsmotor 32, ein Wasserkühler 34 sowie eine Kupplung 36 mit Pumpen. Ebenfalls ist ein Hydraulikbehälter 40 für Hydraulikflüssigkeit vorgesehen.

Zwischen den Antriebsrädern 22 ist ein Antriebsmotor 42 erkennbar. Aus diesem sind Gelenkwellen 44 herausgeführt und mit einer Drop-Box 46 verbunden. Der Höhenunterschied zwischen den beiden Gelenkwellen 44 beträgt etwa 800 mm.

Im vorderen Bereich sind weiterhin ein Ölkühler 48, eine Schaltanlage 50 (mit Trafo 58) sowie insgesamt 5 Umrichter 52 angeordnet. In Fahrtrichtung vorne ist weiterhin stirnseitig das für Fahrlader 20 übliche Klickgelenk 54 vorgesehen.

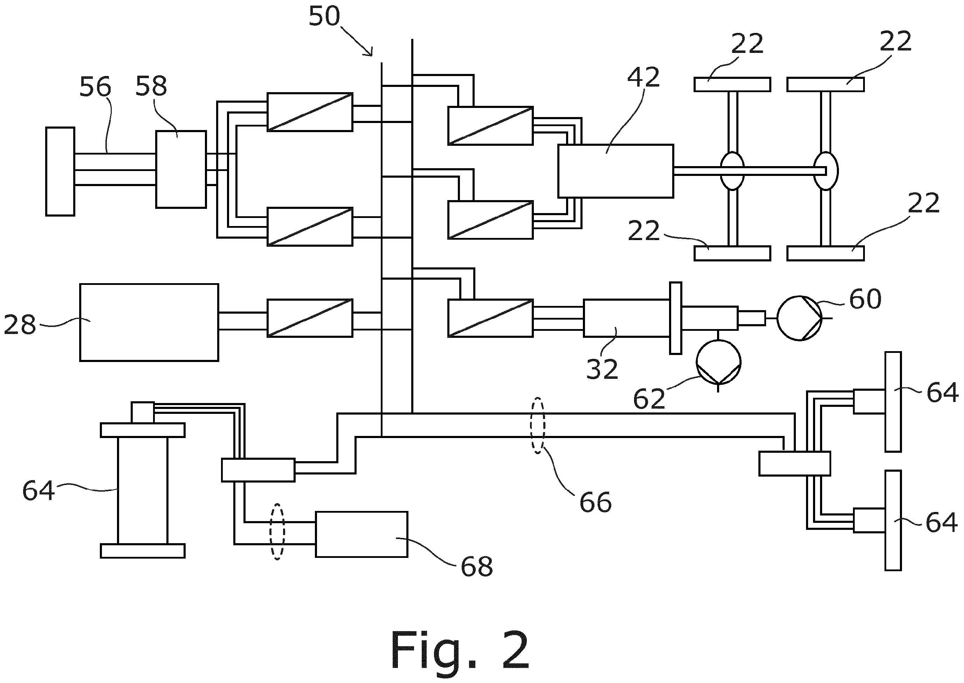

Figur 2 verdeutlicht den Systemaufbau des erfindungsgemäßen Fahrladers 20. Gezeigt ist ein Versorgungsnetzanschluss 56, der mit dem Trafo 58 verbunden ist. Der Trafo 58 wandelt die vom Versorgungsnetz anstehenden etwa 1000 Volt auf die benötigte Spannung um. Als zweite Energiequelle ist der Energiespeicher 28 gezeigt.

Über die Schaltanlage 50 wird die von den beiden Energiequellen bereitgestellte Energie auf den Antriebsmotor 42 oder den Hilfsantriebsmotor 32 geschaltet. Die vom Versorgungsnetz oder vom Energiespeicher 28 bereitgestellte Energie wird dabei unmittelbar auf den Antriebsmotor 42 geschaltet, also unter Umgehung des Hilfsantriebsmotors 32 bzw. eines hydraulischen Strömungsgetriebes. Weiterhin ist eine übliche 24-Volt-Batterie 68 vorgesehen.

An den Hilfsantriebsmotor 32 schließen sich weitere Verbraucher an, beispielsweise eine Bremspumpe 60 sowie eine Gelenk-/Arbeitspumpe 62 an. Das erfindungsgemäße System weist weiterhin noch zusätzliche Asynchronmaschinen 64 auf, die über ein Gleichstromnetz 66 betrieben werden. Der Antriebsmotor 42 ist im gezeigten Ausführungsbeispiel als permanent erregte Synchronmaschine und der Hilfsantriebsmotor 32 als Asynchronmaschine 64 ausgeführt.

## Patentansprüche

1. Elektrisch angetriebenes verfahrbares Untertagefahrzeug, nämlich ein Fahrlader (20), aufweisend
- ein Fahrwerk mit mindestens zwei angetriebenen Antriebsrädern (22),
- ein elektrisches Schleppkabel (26) zum Anschluss an ein elektrisches Versorgungsnetz,
- einen elektrisch mit dem Schleppkabel (26) verbundenen elektrischen Antriebsmotor (42) zum Antrieb der Antriebsräder (22),
- einen Energiespeicher (28),
- einen Hilfsantriebsmotor (32) mit anschließendem hydraulischen Strömungsgetriebe,
- eine Schaltanlage (50) und einen Prozessor zur Regelung der Versorgung des elektrischen Antriebsmotors (42) und des elektrischen Hilfsantriebsmotors (32) mit elektrischer Energie,
wobei
- der Antriebsmotor (42) die Antriebsräder (22) unter Umgehung des hydraulischen Strömungsgetriebes unmittelbar antreibt,
- die vom Energiespeicher (28) bereitgestellte Energie zum Antrieb der Antriebsräder (22) und zum zeitweisen Verfahren des Fahrladers (20) unabhängig vom Versorgungsnetz ausreicht
**dadurch gekennzeichnet, dass** eine Bremsanlage vorgesehen ist, deren beim Bremsvorgang freiwerdende kinetische Energie über den als Generator arbeitenden Antriebsmotor (42) in das elektrische System des Fahrladers (20) zurückgespeist wird, dass der Prozessor die Nutzung der zurückgespeisten Energie derart regelt, dass die zurückgespeiste Energie bedarfsweise dem Energiespeicher (28) oder Verbrauchern zugeführt wird, wenn diese eine Energieanforderung haben, dass der Prozessor die Nutzung der zurückgespeisten Energie derart regelt, dass die zurückgespeiste Energie dann, wenn der Energiespeicher (28) keine Energie aufnehmen kann und keine Energieanforderung der Verbraucher besteht, in das Versorgungsnetz eingeleitet wird, und dass der Prozessor dann eine mechanische Bremsanlage aktiviert, wenn weder der Fahrlader (20) noch das Versorgungsnetz zurückgespeiste Energie aufnehmen kann.

2. Untertagefahrzeug nach Anspruch 1, **dadurch gekennzeichnet, dass** der Prozessor der Schaltanlage (50) das Verhältnis der elektrischen Energieströme aus dem Versorgungsnetz und dem Energiespeicher (28) bedarfsabhängig regelt.

3. Untertagefahrzeug nach Anspruch 2, **dadurch gekennzeichnet, dass** der Prozessor der Schaltanlage (50) die elektrischen Energieströme derart regelt, dass bei einer Spitzenlastanforderung gleichzeitig Energie des Versorgungsnetzes und Energie des Energiespeichers (28) genutzt wird.

4. Verfahren zum Betrieb eines elektrisch angetriebenen verfahrbaren Untertagefahrzeugs, nämlich eines Fahrladers (20), aufweisend
- ein Fahrwerk mit mindestens zwei angetriebenen Antriebsrädern (22),
- ein elektrisches Schleppkabel (26) zum Anschluss an ein elektrisches Versorgungsnetz,
- einen elektrisch mit dem Schleppkabel (26) verbundenen elektrischen Antriebsmotor (42) zum Antrieb der Antriebsräder (22),
- einen Energiespeicher (28), dessen bereitgestellte Energie zum Antrieb der Antriebsräder (22) und zum zeitweisen Verfahren des Fahrladers (20) unabhängig vom Versorgungsnetz ausreicht,
- einen Hilfsantriebsmotor (32) mit anschließendem hydraulischen Strömungsgetriebe,
- eine Schaltanlage (50) und einen Prozessor zur Regelung der Versorgung des elektrischen Antriebsmotors (42) und des elektrischen Hilfsantriebsmotors (32) mit elektrischer Energie,
**dadurch gekennzeichnet, dass**
- der Antriebsmotor (42) die Antriebsräder (22) unter Umgehung des hydraulischen Strömungsgetriebes unmittelbar antreibt, wenn die elektrische Versorgung über das Versorgungsnetz erfolgt,
- die Antriebsräder (22) alternativ von der vom Energiespeicher (28) bereitgestellten Energie antreibbar sind
**dadurch gekennzeichnet, dass** eine Bremsanlage vorgesehen ist, deren beim Bremsvorgang freiwerdende kinetische Energie über den als Generator arbeitenden Antriebsmotor (42) in das elektrische System des Fahrladers (20) zurückgespeist wird, dass der Prozessor die Nutzung der zurückgespeisten Energie derart regelt, dass die zurückgespeiste Energie bedarfsweise dem Energiespeicher (28) oder Verbrauchern zugeführt wird, wenn diese eine Energieanforderung haben, dass der Prozessor die Nutzung der zurückgespeisten Energie derart regelt, dass die zurückgespeiste Energie dann, wenn der Energiespeicher (28) keine Energie aufnehmen kann und keine Energieanforderung der Verbraucher besteht, in das Versorgungsnetz eingeleitet wird, und dass der Prozessor dann eine mechanische Bremsanlage aktiviert, wenn weder der Fahrlader (20) noch das Versorgungsnetz zurückgespeiste Energie aufnehmen kann.

5. Verfahren nach Anspruch 4, **dadurch gekennzeichnet, dass** der Prozessor der Schaltanlage (50) das Verhältnis der elektrischen Energieströme des Versorgungsnetzes und des Energiespeichers (28) bedarfsabhängig regelt.

6. Verfahren nach Anspruch 5, **dadurch gekennzeichnet, dass** der Prozessor der Schaltanlage (50) die elektrischen Energieströme derart regelt, dass bei einer Spitzenlastanforderung gleichzeitig Energie des Versorgungsnetzes und Energie des Energiespeichers (28) genutzt wird.

## Claims

1. An electrically driven, movable underground vehicle, namely a load-haul-dump machine (20), comprising
- a chassis with at least two driven drive wheels (22),
- an electrical trailing cable (26) for connection to an electrical supply network,
- an electric drive motor (42), which is electrically connected to the trailing cable (26), for driving the drive wheels (22),
- an energy storage unit (28),
- an auxiliary drive motor (32) with a subsequent hydraulic fluid transmission,
- a switchgear assembly (50) and a processor for controlling the supply of the electric drive motor (42) and the electric auxiliary drive motor (32) with electrical energy,
wherein
- the drive motor (42) directly drives the drive wheels (22) while bypassing the hydraulic fluid transmission,
- the energy provided by the energy storage unit (28) is sufficient for driving the drive wheels (22) and for temporarily moving the load-haul-dump machine (20) independently of the supply network,
**characterized in that** a braking system is provided whose kinetic energy, which is released during the braking process, is fed back into the electrical system of the load-haul-dump machine (20) via the drive motor (42), which works as a generator, that the processor controls the utilization of the fed-back energy in such a way that the fed-back energy is supplied to the energy storage unit (28) or to consumer loads as required if they have an energy requirement, that the processor controls the utilization of the fed-back energy in such a way that the fed-back energy is fed into the supply network when the energy storage unit (28) is unable to take up energy and there is no energy requirement of the consumer loads, and that the processor activates a mechanical braking system when neither the load-haul-dump machine (20) nor the supply network are able to take up fed-back energy.

2. The underground vehicle according to claim 1, **characterized in that** the processor of the switchgear assembly (50) controls the ratio of the electrical energy flows from the supply network and the energy storage unit (28) depending on the demands.

3. The underground vehicle according to claim 2, **characterized in that** the processor of the switchgear assembly (50) controls the electrical energy flows in such a way that, in the event of a peak load requirement, energy of the supply network and energy of the energy storage unit (28) are used at the same time.

4. A method for operating an electrically driven, movable underground vehicle, namely a load-haul-dump machine (20), comprising
- a chassis with at least two driven drive wheels (22),
- an electrical trailing cable (26) for connection to an electrical supply network,
- an electric drive motor (42), which is electrically connected to the trailing cable (26), for driving the drive wheels (22),
- an energy storage unit (28) whose provided energy is sufficient for driving the drive wheels (22) and for temporarily moving the load-haul-dump machine (20) independently of the supply network,
- an auxiliary drive motor (32) with a subsequent hydraulic fluid transmission,
- a switchgear assembly (50) and a processor for controlling the supply of the electric drive motor (42) and the electric auxiliary drive motor (32) with electrical energy,
**characterized in that**
- the drive motor (42) directly drives the drive wheels (22) while bypassing the hydraulic fluid transmission, when the electrical supply is effected via the supply network,
- the drive wheels (22) can be driven alternatively by the energy provided by the energy storage unit (28),
**characterized in that** a braking system is provided whose kinetic energy, which is released during the braking process, is fed back into the electrical system of the load-haul-dump machine (20) via the drive motor (42), which works as a generator, that the processor controls the utilization of the fed-back energy in such a way that the fed-back energy is supplied to the energy storage unit (28) or to consumer loads as required if they have an energy requirement, that the processor controls the utilization of the fed-back energy in such a way that the fed-back energy is fed into the supply network when the energy storage unit (28) is unable to take up energy and there is no energy requirement of the consumer loads, and that the processor activates a mechanical braking system when neither the load-haul-dump machine (20) nor the supply network are able to take up fed-back energy.

5. The method according to claim 4, **characterized in that** the processor of the switchgear assembly (50) controls the ratio of the electrical energy flows of the supply network and the energy storage unit (28) depending on the demands.

6. The method according to claim 5, **characterized in that** the processor of the switchgear assembly (50) controls the electrical energy flows in such a way that, in the event of a peak load requirement, energy of the supply network and energy of the energy storage unit (28) are used at the same time.

## Revendications

1. Véhicule souterrain mobile à entraînement électrique, à savoir une chargeuse-transporteuse (20), comprenant
- un châssis ayant au moins deux roues motrices (22) entraînées,
- un câble trainant électrique (26) pour le raccordement à un réseau d'alimentation électrique,
- un moteur électrique d'entraînement (42) qui est relié électriquement au câble trainant (26) et est destiné à entraîner les roues motrices (22),
- un réservoir d'énergie (28),
- un moteur d'entraînement auxiliaire (32) avec une transmission hydraulique qui suit celui-ci,
- un appareillage de commutation (50) et un processeur pour réguler l'alimentation en énergie électrique du moteur électrique d'entraînement (42) et du moteur électrique d'entraînement auxiliaire (32),
dans lequel
- le moteur d'entraînement (42) entraîne directement les roues motrices (22) en contournant la transmission hydraulique,
- l'énergie fournie par le réservoir d'énergie (28) est suffisante pour entraîner les roues motrices (22) et pour déplacer temporairement la chargeuse-transporteuse (20) indépendamment du réseau d'alimentation, **caractérisé par le fait qu'**un système de freinage est prévu dont l'énergie cinétique libérée pendant le processus de freinage est réinjectée dans le système électrique de la chargeuse-transporteuse (20) via le moteur d'entraînement (42) fonctionnant en tant que générateur, que le processeur régule l'utilisation de l'énergie réinjectée de telle sorte que l'énergie réinjectée est fournie selon les besoins au réservoir d'énergie (28) ou aux consommateurs lorsque ceux-ci ont un besoin en énergie, que le processeur régule l'utilisation de l'énergie réinjectée de telle manière que l'énergie réinjectée est introduite dans le réseau d'alimentation lorsque le réservoir d'énergie (28) ne peut recevoir aucune énergie et qu'aucune énergie n'est requise de la part des consommateurs, et que le processeur active un système de freinage mécanique lorsque ni la chargeuse-transporteuse (20) ni le réseau d'alimentation ne peut recevoir de l'énergie réinjectée.

2. Véhicule souterrain selon la revendication 1, **caractérisé par le fait que** le processeur de l'appareillage de commutation (50) régule en fonction des besoins le rapport des flux d'énergie électrique du réseau d'alimentation et du réservoir d'énergie (28).

3. Véhicule souterrain selon la revendication 2, **caractérisé par le fait que** le processeur de l'appareillage de commutation (50) régule les flux d'énergie électrique de telle sorte que, en cas de besoin de pointe de charge, de l'énergie du réseau d'alimentation et de l'énergie du réservoir d'énergie (28) sont utilisées en même temps.

4. Procédé destiné à faire fonctionner un véhicule souterrain mobile à entraînement électrique, à savoir une chargeuse-transporteuse (20), comprenant
- un châssis ayant au moins deux roues motrices (22) entraînées,
- un câble trainant électrique (26) pour le raccordement à un réseau d'alimentation électrique,
- un moteur électrique d'entraînement (42) qui est relié électriquement au câble trainant (26) et est destiné à entraîner les roues motrices (22),
- un réservoir d'énergie (28) dont l'énergie fournie est suffisante pour entraîner les roues motrices (22) et pour déplacer temporairement la chargeuse-transporteuse (20) indépendamment du réseau d'alimentation,
- un moteur d'entraînement auxiliaire (32) avec une transmission hydraulique qui suit celui-ci,
- un appareillage de commutation (50) et un processeur pour réguler l'alimentation en énergie électrique du moteur électrique d'entraînement (42) et du moteur électrique d'entraînement auxiliaire (32),
**caractérisé par le fait que**
- le moteur d'entraînement (42) entraîne directement les roues motrices (22) en contournant la transmission hydraulique, lorsque l'alimentation électrique se fait via le réseau d'alimentation,
- les roues motrices (22) peuvent alternativement être entraînées par l'énergie fournie par le réservoir d'énergie (28),
**caractérisé par le fait qu'**un système de freinage est prévu dont l'énergie cinétique libérée pendant le processus de freinage est réinjectée dans le système électrique de la chargeuse-transporteuse (20) via le moteur d'entraînement (42) fonctionnant en tant que générateur, que le processeur régule l'utilisation de l'énergie réinjectée de telle sorte que l'énergie réinjectée est fournie selon les besoins au réservoir d'énergie (28) ou aux consommateurs lorsque ceux-ci ont un besoin en énergie, que le processeur régule l'utilisation de l'énergie réinjectée de telle manière que l'énergie réinjectée est introduite dans le réseau d'alimentation lorsque le réservoir d'énergie (28) ne peut recevoir aucune énergie et qu'aucune énergie n'est requise de la part des consommateurs, et que le processeur active un système de freinage mécanique lorsque ni la chargeuse-transporteuse (20) ni le réseau d'alimentation ne peut recevoir de l'énergie réinjectée.

5. Procédé selon la revendication 4, **caractérisé par le fait que** le processeur de l'appareillage de commutation (50) régule en fonction des besoins le rapport des flux d'énergie électrique du réseau d'alimentation et du réservoir d'énergie (28).

6. Procédé selon la revendication 5, **caractérisé par le fait que** le processeur de l'appareillage de commutation (50) régule les flux d'énergie électrique de telle sorte que, en cas de besoin de pointe de charge, de l'énergie du réseau d'alimentation et de l'énergie du réservoir d'énergie (28) sont utilisées en même temps.
